# EUROPÄISCHE PATENTSCHRIFT

(11) **EP 3 901 083 B1**
(45) Veröffentlichungstag und Bekanntmachung des Hinweises auf die Patenterteilung: **10.08.2022**
(21) Anmeldenummer: 20171320.3
(22) Anmeldetag: 24.04.2020
(51) Int. Cl.: B66D 3/20, G01G 3/12, G01G 19/14

(54) **HEBEZEUG, INSBESONDERE SEIL- ODER KETTENZUG**
HOIST, IN PARTICULAR CABLE OR CHAIN HOIST
ENGIN DE LEVAGE, EN PARTICULIER PALAN À CÂBLE OU À CHAÎNE

(43) Veröffentlichungstag der Anmeldung: 27.10.2021
(73) Patentinhaber: Abus Kransysteme GmbH, 51647 Gummersbach (DE)
(72) Erfinder: Bube, Eckhard, 51647 Gummersbach (DE); Krebber, Gerald, 51645 Gummersbach (DE)
(74) Vertreter: Patentanwälte Dörner & Kötter PartG mbB

(56) Entgegenhaltungen:
- EP-A2- 1 976 790
- JP-A- 2019 069 849
- US-A1- 2019 023 542

## Beschreibung

Die Erfindung betrifft ein Hebezeug, insbesondere Seil- oder Kettenzug, mit einem Hubwerk zum Heben und Senken einer Last, umfassend ein Gehäuse, das einen Motor aufnimmt, der mit einem Getriebe verbunden ist, das eine Welle antreibt, die in dem Gehäuse drehbar gelagert ist und auf der eine Haspel angeordnet ist, die ein Seil oder eine Kette aufnimmt, die durch eine Öffnung des Gehäuses geführt ist und die endseitig einen Lasthaken aufweist, wobei in dem Gehäuse eine Messeinrichtung zur kontinuierlichen Erfassung der an dem Lasthaken anliegenden Last vorhanden ist.

Gemäß der DIN EN 14492 -2 : 2019-09 "Krane - kraftbetriebene Winden und Hubwerke" ist zur Erkennung von Über- und Unterlastzuständen eines Hubwerkes eine elektronische Lasterfassung vorgesehen, die als Einzellösung oder auch als Ergänzung zu direkten Hubkraftbegrenzern, wie beispielsweise Rutschkupplungen eingesetzt werden kann. Eine Überlast kann sich beispielsweise dadurch ergeben, dass die anzuhebende Last ein zu großes Gewicht aufweist oder dass sich der Haken des Hebezeugs zusammen mit der Last verklemmt. Derartige Überlasten können zum Absturz der Last oder sogar des gesamten Hebezeugs führen. Um derartige Überlasten zeitnah zu erkennen, sind bei Hebezeugen der vorgenannten Art Messeinrichtungen zur kontinuierlichen Ermittlung der anliegenden Last vorgesehen.

Bei den vorstehend genannten indirekt wirkenden Hubkraftbegrenzern wird die Überlast nicht direkt im Laststrang detektiert, sondern über mechanische, elektrische und elektronische Hilfskonstruktionen erfasst und geeignet ausgewertet. Beispielsweise können hier Seilkraftbegrenzer oder Wägezellen zum Einsatz kommen. Nachteilig an diesen vorbekannten, indirekt wirkenden Hubkraftbegrenzern ist, dass die zur Erfassung einer Überlast erforderlichen mechanischen Kenngrößen außerhalb des Gehäuses des Hebezeugs detektiert werden, weshalb stets eine mechanische Verbindung, beispielsweise ein Hebel oder eine Rolle, oder auch eine elektrische Verbindung in Gestalt eines Kabels, zwischen dem Ort der Lasterfassung und dem am Hebezeug angeordneten Auswertegerät vorhanden sein muss. Hinzu kommt, dass bei den vorbekannten indirekten Hubkraftbegrenzern innere Überlastungen, die beispielsweise durch ein Verklemmen des Tragmittels im Gehäuse des Hebezuges hervorgerufen werden, nicht detektiert werden können. Vor diesem Hintergrund ist in der DE 10 2011 115 910 A1 eine Vorrichtung zur Lasterfassung an Hebezeugen vorgeschlagen, die sowohl äußere, als auch innere Überlastungen detektiert. Hierzu ist der mit einem Antriebsmotor in Wirkverbindung stehenden Antriebswelle zusätzlich ein Lagerträger mit Lager zugeordnet, wobei ein Sensor vorgesehen ist, der entweder die auf den Lagerträger wirkenden Kräfte oder die Verformung des Lagerträgers erfassend ausgebildet ist. Das von dem Sensor detektierte Signal wird anschließend in einer Steuerung ausgewertet.

Dokumente EP 1976790 A2, JP 2019069849 und US 2019/083542 offenbaren Hebezeuge gemäß dem Oberbegriff des Anspruchs 1.

Nachteilig an der vorbekannten Vorrichtung zur Lasterfassung an Hebezeugen ist jedoch, dass dieses mit einem hohen konstruktiven Aufwand verbunden ist, da der zusätzlich vorgesehene Lagerträger mit Lager bereits bei der Konstruktion des Gehäuses zu berücksichtigen ist. Insbesondere bei der Platzierung des Sensors im Lager ist eine kostenaufwändige Lagerkonstruktion erforderlich.

Hier will die Erfindung Abhilfe schaffen. Der Erfindung liegt die Aufgabe zugrunde, ein Hebezeug zur Verfügung zu stellen, bei dem die anliegende Hublast kontinuierlich in konstruktiv einfacher Weise und kostengünstig ermittelbar ist. Zudem soll die vorgesehene Lösung einen geringen Bauraum beanspruchen sowie auch in einfacher Weise und kostengünstig bei bestehenden Hebezeugen nachrüstbar sein. Erfindungsgemäß wird diese Aufgabe durch ein Hebezeug mit den Merkmalen des kennzeichnenden Teils des Patentanspruchs 1 gelöst.

Mit der Erfindung ist ein Hebezeug zur Verfügung gestellt, bei dem eine kontinuierliche Erfassung der Hublast in konstruktiv einfacher Weise sowie Kostengünstig ermöglicht ist. Zudem zeichnet sich die zur Hublastermittlung vorgesehene konstruktive Lösung durch einen geringen Bauraum sowie die Möglichkeit zur Nachrüstung bestehender Hebezeuge aus. Dadurch, dass die Messeinrichtung einen Abstandssensor umfasst, der in einem bei unbelastetem Seil bzw. bei unbelasteter Kette definierten Abstand zu einem mit der Welle oder dem Gehäuse verbundenen Messobjekt an dem Gehäuse befestigt ist, ist eine konstruktiv einfache und zugleich kostengünstige Lasterfassung erzielt. Dabei kann es sich bei dem Messobjekt sowohl um einen definierten Gehäuseabschnitt, als auch um ein separat mit dem Gehäuse oder der Welle verbundenes Bauteil handeln. Dabei liegt der Erfindung die Erkenntnis zugrunde, dass eine Laständerung stets mit einer Verwindung des Gehäuses und der Welle einhergeht, die im funktionellen Zusammenhang mit der jeweils anliegenden Last steht. Durch die kontinuierliche Messung des Abstands des Messobjekts zum Abstandssensor ist somit die jeweils anliegende Last ermittelbar.

Der Abstandssensor ist mit einem Rechnermodul verbunden, das zur Ermittlung der anliegenden Last auf Basis des von dem Abstandssensor übermittelten Abstands eingerichtet ist. Dabei ist in dem Rechnermodul vorzugsweise ein Algorithmus zur Berechnung einer Last auf Basis eines von dem Abstandssensor gemeldeten Messabstands hinterlegt. Ein solcher Algorithmus kann beispielsweise auf Basis empirischer Messwerte und deren Interpolation erfolgen.

In alternativer Ausgestaltung der Erfindung ist das Rechnermodul mit einer Speichereinheit verbunden, in der empirisch ermittelte Lastwerte für unterschiedliche Referenzabstände hinterlegt sind, wobei das Rechnermodul eingerichtet ist, in Art eines Expertensystems auf Basis des von dem Abstandssensor jeweils ermittelten Messabstands durch Interpolation der hinterlegten Abstands- und Lastwerte die anliegende Last zu ermitteln.

In Weiterbildung der Erfindung ist das Messobjekt ein axial an der Welle angeordneter Zapfen. Hierdurch ist eine durch Lasteinwirkung erfolgte Biegung der Welle erfassbar, die durch die Biegebewegung endseitig der Welle durch den angeformten Zapfen noch verstärkt wird, wodurch die Messauflösung verbessert ist.

In alternativer Ausgestaltung der Erfindung ist das Messobjekt ein definierter Bestandteil des Gehäuses selbst. Hierdurch ist eine einfache Nachrüstung eines Hebezeugs ermöglicht, dessen Gehäuse lediglich mit einem ortsfest anzuordnenden Abstandssensor zu versehen ist.

In Ausgestaltung der Erfindung ist der Abstandssensor berührungslos, insbesondere als induktiver, kapazitiver oder optischer Abstandssensor ausgebildet. Hierdurch ist ein mechanischer Verschleiß ausgeschlossen, der zu Beeinträchtigungen der Messergebnisse führen würde.

In Weiterbildung der Erfindung ist das Rechnermodul zur Ausgabe von ermittelten Lastwerten mit einem Monitor verbunden. Alternativ oder zusätzlich kann das Rechnermodul auch mit der Steuerung des Hubwerks verbunden und eingerichtet sein, bei Überschreiten eines definierten Grenzwertes einen bestimmten Prozess auszulösen, wie beispielsweise ein Nothalt des Hebezeugs oder auch die Verhinderung der Umschaltung von einem langsamen Gang auf einen Schnellgang.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

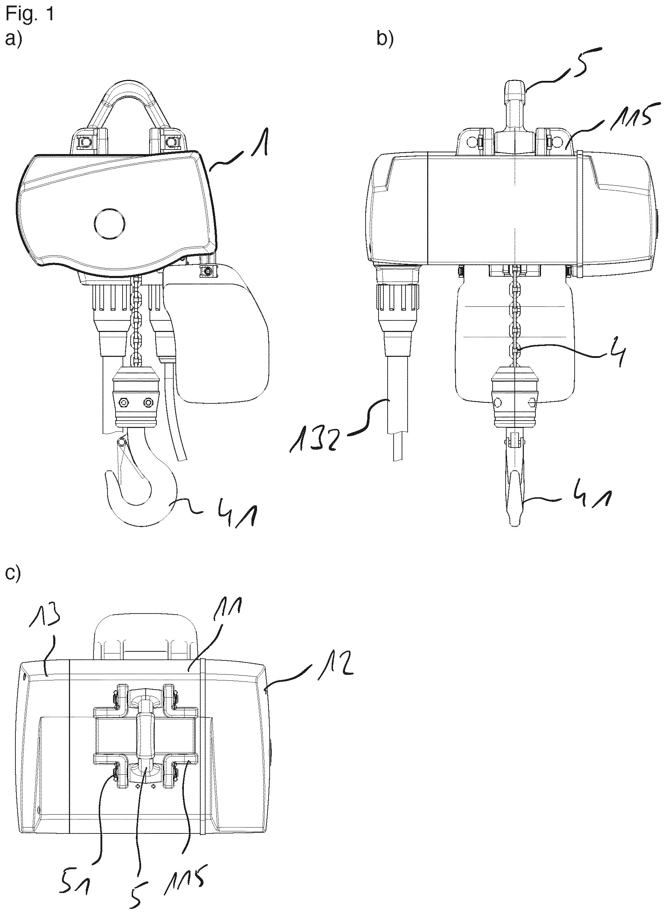

- Figur 1: die schematische Darstellung eines Hebezeugs
a) in einer ersten Seitenansicht;
b) in einer zweiten Seitenansicht;
c) in der Draufsicht;

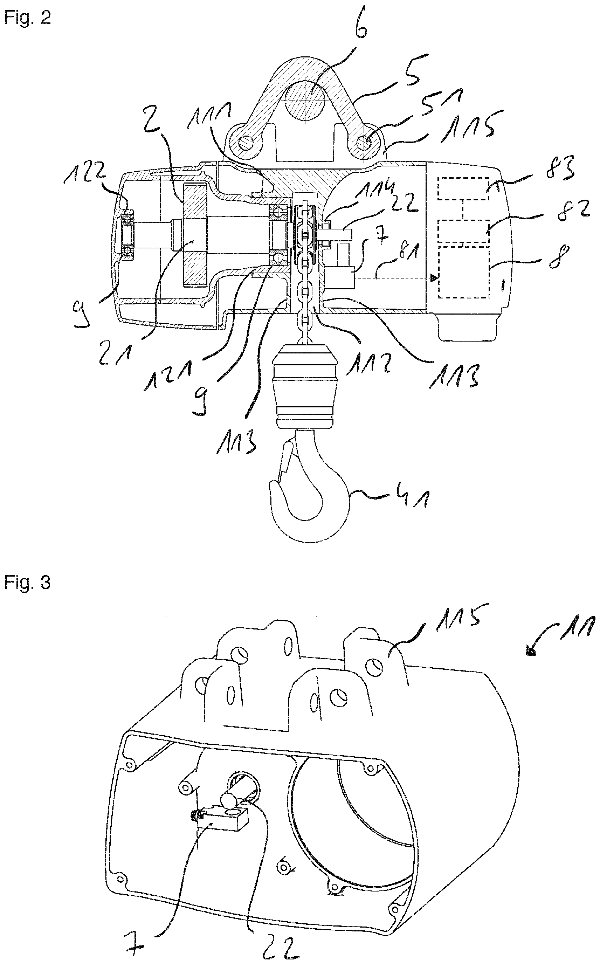

Figur 2 die schematische Darstellung des Hebezeugs aus Figur 1 im Längsschnitt;
Figur 3 die schematische Darstellung des Mittelstücks des Gehäuses des Hebezeugs aus Figur 2 in einer Ansicht von vorne;

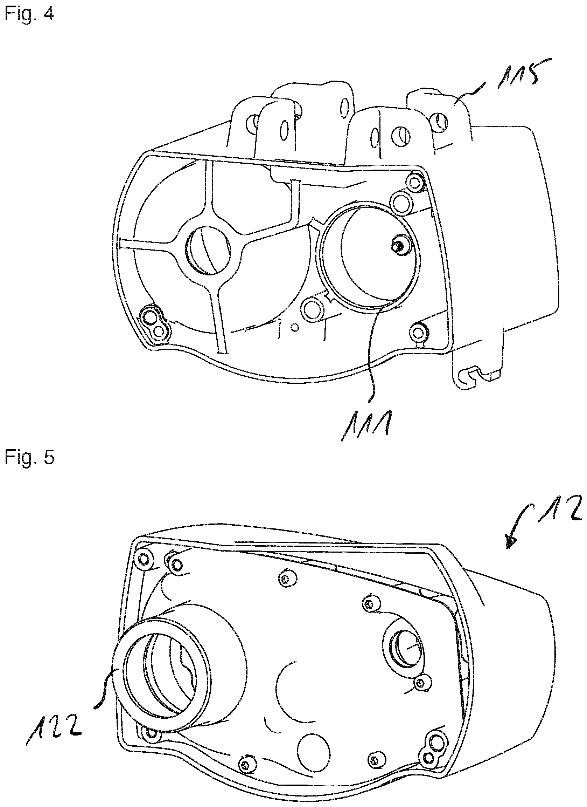

Figur 4 die Darstellung des Mittelstücks des Gehäuses aus Figur 3 in einer rückwärtigen Ansicht und
Figur 5 die schematische Darstellung des Antriebsstücks des Gehäuses des Hebezeugs aus Figur 2.

Das als Ausführungsbeispiel gewählte Hebezeug besteht im Wesentlichen aus einem Gehäuse 1, das ein Getriebe 2 aufnimmt, das mit einem - nicht dargestellten - Motor verbunden ist. Das Getriebe 2 treibt eine Welle 21 an, die in dem Gehäuse 1 drehbar gelagert ist und auf der eine Haspel 3 angeordnet ist, die eine Kette 4 aufnimmt, an der endseitig ein Lasthaken 41 befestigt ist. Das Gehäuse 1 ist über einen Tragwinkel 5 mit einem - lediglich schematisch angedeuteten - Kragarm 6 verbunden, der das Hebezeug aufnimmt.

Das Gehäuse 1 besteht im Wesentlichen aus einem Mittelstück 11, an dessen einer Seite ein Antriebsstück 12 sowie diesem gegenüberliegend ein Steuerstück 13 befestigt ist. Das Mittelstück 11 ist im Wesentlichen hohlzylindrisch ausgebildet und weist an seiner Innenwandung eine rohrförmige Aufnahme 111 für die Wellenführung 121 des Antriebsstücks 12 auf. Die Aufnahme 111 mündet in einem Spindelraum 112, der zum Durchtritt der Kette 4 an der dem Tragwinkel 5 gegenüberliegenden Unterseite des Mittelstücks 11 offen ausgebildet ist. An seiner der Aufnahme 111 gegenüberliegenden Seite ist der Spindelraum 12 durch eine Trennwand 113 begrenzt, die eine Durchführung 114 für den Zapfen 22 der Welle 21 aufweist. Radial beabstandet zu der Durchführung 114 ist an der Trennwand 113 ein induktiver Abstandssensor 7 angeordnet, der über eine Leitung 81 mit einem in dem Steuerstück 13 angeordneten Rechnermodul 8 verbunden ist. An seiner dem Lasthaken 41 gegenüberliegenden Oberseite sind an dem Mittelstück 11 des Gehäuses 1 Flanschteile 115 angeformt, an denen der Tragwinkel 5 mittels Bolzen 51 befestigt ist.

Das Antriebsstück 12 des Gehäuses 1 ist im Wesentlichen glockenförmig ausgebildet, derart, dass seine durchmessererweiterte Außenwandung in die Außenwandung des Mittelstücks 11 des Gehäuses 1, an der das Antriebsstück 12 anliegt, übergeht. Innen ist an das Antriebsstück 12 eine flaschenartige Wellenführung 121 angeformt, an deren durchmesserreduziertem, flaschenhalsartigen Ende ein Kugellager 9 zur Lagerung der Welle 21 des Getriebes 2 angeordnet ist. Dem Lager 9 gegenüberliegend ist in dem Antriebsstück 12 ein Lagersitz 122 angeformt, der wiederum ein Kugellager 9 zur Lagerung der Welle 21 aufnimmt. Der Außendurchmesser des durchmesserreduzierten Endes der Wellenführung 21 entspricht im Wesentlichen dem Innendurchmesser der Aufnahme 111 des Mittelstücks 11 des Gehäuses 1, in welches die Wellenführung 121 eingeschoben ist.

Das Steuerstück 13 ist an das Mittelstück 11 des Gehäuses 1 angeformt und nimmt die Motorsteuerung des Hebezeugs auf. An seiner dem Tragwinkel 5 abgewandten Unterseite weist das Steuerstück 13 einen Durchlass 131 zur Durchführung einer Steuerleitung 132 auf. In dem Steuerstück ist weiterhin ein Rechnermodul 8 angeordnet das mit einem Speichermodul 82 und einer Anzeige 83 verbunden ist.

Die Welle 21 des Getriebes 2 ist von den beiden Kugellagern 9 des Antriebsstücks 12 des Gehäuses 1 aufgenommen und ragt endseitig in den Spindelraum 112 des Mittelstücks 11 hinein, in dem eine Haspel 3 angeordnet ist, die auf der Welle 21 befestigt ist. An die Welle 21 ist axial ein Zapfen 22 angeformt, der berührungsfrei durch die Durchführung 114 der Trennwand 113 hindurchragt und in einem definierten Abstand zu dem induktiven Abstandssensor 7 angeordnet ist.

Wird an dem Lasthaken 21 der Kette 4 eine Last angebracht, erzeugt diese über die Kette 4 eine Zugkraft auf die Haspel 3, welche die Kraft auf die Welle 21 leitet, wodurch in der Welle 21 ein Biegemoment erzeugt wird. Die auf die Welle 21 eingeleitete Last wird von den Kugellagern 9 aufgenommen, die die auf sie einwirkenden Lagerkräfte an das Gehäuse 1 ableiten, das über den Tragwinkel 5 an dem Kragarm 6 befestigt ist. Durch die auf die Welle 21 und das Gehäuse 1 einwirkenden Kräfte ist eine Verwindung des Gehäuses 1 sowie eine Lageänderung des an der Welle 21 angeformten Zapfens 22 bewirkt. Die hierdurch bewirkte Änderung des Abstandes des mit dem Gehäuse 1 verbundenen Abstandssensors 7 und des Zapfens 22 wird über den induktiven Abstandssensor 7 gemessen und über eine Leitung 81 an das Rechnermodul 8 gemeldet. Das Rechnermodul 8 ist mit einer Speichereinheit 82 verbunden, in der ermittelte Lastwerte für unterschiedliche Referenzabstände zwischen Abstandssensor 7 und Zapfen 22 hinterlegt sind. Das Rechnermodul 8 ist derart eingerichtet, dass auf Basis der von dem Abstandssensor 7 gemeldeten Messabstände durch Interpolation der hinterlegten Abstands- und Lastwerte die jeweils anliegende Last ermittelt wird. Im Ausführungsbeispiel ist das Rechnermodul 8 mit einer Anzeige 83 verbunden, auf der die von dem Rechnermodul 8 ermittelten Lastwerte angezeigt werden.

An Stelle des an die Welle 21 axial angeformten Zapfens kann als Messobjekt auch ein definierte Abschnitt des Gehäuses 1 fungieren. Durch die Verwindung des Gehäuses 1 ändert sich der Abstand dieses definierten Abschnitts zu dem Abstandssensor 7. Diese Abstandsänderung wird von dem induktiven Abstandssensor 7 gemessen und wiederum an das Rechnermodul 8 übermittelt, das auf Basis dieses Messwerts die anliegende Kraft ermittelt.

## Patentansprüche

1. Hebezeug, insbesondere Seil- oder Kettenzug, mit einem Hubwerk zum Heben und Senken einer Last, umfassend ein Gehäuse (1), das einen Motor aufnimmt, der mit einem Getriebe (2) verbunden ist, das eine Welle (21) antreibt, die in dem Gehäuse (1) drehbar gelagert ist und auf der eine Haspel (3) angeordnet ist, die ein Seil oder eine Kette (4) aufnimmt, die durch eine Öffnung des Gehäuses (1) geführt ist und die endseitig einen Lasthaken (41) aufweist, wobei in dem Gehäuse (1) eine Messeinrichtung zur kontinuierlichen Erfassung der an dem Lasthaken (41) anliegenden Last vorhanden ist, wobei die Messeinrichtung einen Abstandssensor (7) umfasst, der in einem bei unbelastetem Seil bzw. unbelasteter Kette (4) definierten Abstand zu einem mit der Welle (21) oder dem Gehäuse (1) verbundenen Messobjekt an dem Gehäuse (1) befestigt ist, **dadurch gekennzeichnet, dass** der Abstandssensor (7) mit einem Rechnermodul (8) verbunden ist, das zur Ermittlung der anliegenden Last auf Basis des von dem Abstandssensor (7) übermittelten Abstands eingerichtet ist.

2. Hebezeug nach Anspruch 1, **dadurch gekennzeichnet, dass** das Messobjekt ein axial an der Welle angeordneter Zapfen (22) ist.

3. Hebezeug nach Anspruch 1, **dadurch gekennzeichnet, dass** das Messobjekt ein definierter Bestandteil des Gehäuses (1) ist.

4. Hebezeug nach einem der vorgenannten Ansprüche, **dadurch gekennzeichnet, dass** der Abstandssensor (7) berührungslos, insbesondere als induktiver, kapazitiver oder optischer Abstandssensor ausgebildet ist.

5. Hebezeug nach einem der vorgenannten Ansprüche, **dadurch gekennzeichnet, dass** in dem Rechnermodul (8) ein Algorithmus zur Berechnung einer Last auf Basis eines von dem Abstandssensor (7) gemeldeten Messabstands hinterlegt ist.

6. Hebezeug nach einem der vorgenannten Ansprüche, **dadurch gekennzeichnet, dass** das Rechnermodul (8) mit einer Speichereinheit (82) verbunden ist, in der empirisch ermittelte Lastwerte für unterschiedliche Referenzabstände des Zapfens (22) zum Abstandssensor (7) hinterlegt sind, wobei das Rechnermodul (8) eingerichtet ist, auf Basis des von dem Abstandssensor ermittelten Messabstands durch Interpolation der hinterlegten Abstands- und Lastwerte die anliegende Last zu ermitteln.

7. Hebezeug nach einem der vorgenannten Ansprüche, **dadurch gekennzeichnet, dass** das Rechnermodul (8) zur Anzeige ermittelter Lastwerte mit einem Monitor (83) verbunden ist.

## Claims

1. Hoist, in particular cable or chain hoist, having a lifting mechanism for lifting and lowering a load, comprising a housing (1), which receives a motor, which is connected to a gear mechanism (2) driving a shaft (21), which is rotatably mounted in the housing (1) and on which a reel (3) is arranged, which receives a cable or a chain (4), which is guided through an opening of the housing (1) and which has a load hook (41) at the end, wherein a measuring device for the continuous detection of the load applied to the load hook (41) is provided in the housing (1), wherein the measuring device comprises a distance sensor (7), which is attached to the housing (1) at a distance from a measuring object connected to the shaft (21) or the housing (1) which is defined when the cable or chain (4) is unloaded, **characterised in that** the distance sensor (7) is connected to a computer module (8), which is set up to determine the applied load on the basis of the distance transmitted by the distance sensor (7).

2. Hoist according to claim 1, **characterised in that** the measuring object is a pin (22) axially arranged on the shaft.

3. Hoist according to claim 1, **characterised in that** the measuring object is a defined component of the housing (1).

4. Hoist according to one of the previous claims, **characterised in that** the distance sensor (7) is contactless, in particular an inductive, capacitive or optical distance sensor.

5. Hoist according to one of the previous claims, **characterised in that** an algorithm for calculating a load on the basis of a measuring distance reported by the distance sensor (7) is stored in the computer module (8).

6. Hoist according to one of the previous claims, **characterised in that** the computer module (8) is connected to a memory unit (82), in which empirically determined load values for different reference distances of the pin (22) to the distance sensor (7) are stored, wherein the computer module (8) is set up to determine the applied load on the basis of the measuring distance determined by the distance sensor by interpolation of the stored distance and load values.

7. Hoist according to one of the previous claims, **characterised in that** the computer module (8) is connected to a monitor (83) to display determined load values.

## Revendications

1. Engin de levage, en particulier palan à câble ou à chaîne, comprenant un mécanisme servant à lever et abaisser une charge, comprenant un carter (1) recevant un moteur lui-même relié à un réducteur (2), lequel réducteur entraîne un arbre (21) en appui rotatif dans le carter (1) et sur lequel arbre est disposé un dévidoir (3) recevant un câble ou une chaîne (4) guidée à travers une ouverture du carter (1) et qui présente en son extrémité un crochet porte-charge (41), sachant que dans le carter (1) est présent un dispositif de mesure servant à la saisie continue de la charge appliquée au crochet porte-charge (41), sachant que le dispositif de mesure comprend un capteur de distance (7) qui est fixé contre le carter (1) à une distance définie - lorsque le câble ou la chaîne (4) se trouve hors charge - d'un objet de mesure relié à l'arbre (21) ou au carter (1), **caractérisé en ce que** le capteur de distance (7) est relié à un module calculateur (8) configuré pour déterminer la charge appliquée sur la base de la distance transmise par le capteur de distance (7).

2. Engin de levage selon la revendication 1, **caractérisé en ce que** l'objet de mesure est une fusée (22) disposée axialement contre l'arbre.

3. Engin de levage selon la revendication 1, **caractérisé en ce que** l'objet de mesure est une partie intégrante définie du carter (1).

4. Engin de levage selon l'une des revendications précédentes, **caractérisé en ce que** le capteur de distance (7) est configuré sans contact physique, notamment comme capteur inductif, capacitif ou optique de distance.

5. Engin de levage selon l'une des revendications précédentes, **caractérisé en ce que** le module calculateur (8) contient un algorithme servant à calculer une charge sur la base d'un écart de mesure signalé par le capteur de distance (7).

6. Engin de levage selon l'une des revendications précédentes, **caractérisé en ce que** le module calculateur (8) est relié à une unité mémoire (82) contenant des valeurs de charge déterminées empiriquement pour différentes distances de référence entre la fusée (22) et le capteur de distance (7), sachant que le module calculateur (8) est configuré pour déterminer - sur la base de la distance de mesure déterminée par le capteur de distance - la charge en présence par interpolation des valeurs de distance et de charge en mémoire.

7. Engin de levage selon l'une des revendications précédentes, **caractérisé en ce que** le module calculateur (8) est relié avec un moniteur (83) pour afficher les valeurs de charge déterminées.
